# EUROPEAN PATENT APPLICATION

(11) **EP 1 715 668 A1**
(43) Date of publication of application: **25.10.2006**
(21) Application number: 05290882.9
(22) Date of filing: 20.04.2005
(51) Int. Cl.: H04M 3/42, H04M 7/00, H04Q 3/00

(54) **Method of establishing a telecommunication connection**

(71) Applicant: ALCATEL, 75008 Paris (FR)
(72) Inventor: Orlamünder, Harald, Dr.-Ing., 71254 Ditzingen (DE); Lautenschlager, Wolfgang, Dipl.-Ing., 71287 Welssach-Flacht (DE); Stahl, Uwe, Dipl.-Ing., 71229 Leonberg (DE)
(74) Representative: LOUIS, PÖHLAU, LOHRENTZ

(57) **Abstract**

The invention concerns a method of establishing a telecommunication connection between a terminal (10) of a calling party (100) connected to a circuit-switched network (1) and a terminal (20) of a called party (200) connected to a packet-switched network (2, 3), as well as a network server (14) to execute the method. A call request (201, 301) addressed to a telecommunication address, in particular a telephone number, issued to the called party (100) by a circuit-switched network (1) triggers a network node (11) to send a service request message (203, 303) to the network server (14). By means of a domain name server (60), a VolP gateway (5) is supplied with a URL of the called party (200) and enabled to initiate the establishment of a telecommunication connection (213, 314) between the terminal (10) of the calling party (100) and the terminal (20) of the called party (200) through the packet-switched network (2, 3).

## Description

The invention relates to a method of establishing a telecommunication connection and a server for executing the method.

Number portability (= NP) allows telephone subscribers in the Global Switched Telephone Network (= GSTN), also known as ISDN or PSTN, to keep their phone numbers when they change their service providers (service provider portability) or subscribed services (service portability), or when they move to a new location (location portability) (ISDN = Integrated Services Digital Network; PSTN = Public Switched Telephone Network). During the last decade or so, telecommunication service providers in many countries have been directed by regulatory authorities to offer telephone number portability. Before that, a major barrier to competition was the inability of subscribers to switch from one telephone company to another while retaining the telephone number which was originally assigned to the subscriber by a so-called donor network.

Request for Comments (= RFC) document 3482 maintained by the IETF (= Internet Engineering Task Force) provides an overview of the portability of E.164, i.e., ordinary telephone numbers in the GSTN. Among other techniques, service number portability can be achieved by QoR (= Query on Release). In the QoR scheme, an originating network receives a call addressed to a called party from a calling party and routes the call to the donor network. If the donor network releases the call and indicates that the dialled telephone number has been ported out of that switch, the originating network sends a query to a centrally administered NPDB (= Number Portability Data Base). The NPDB returns a routing number associated with the dialed telephone number. The originating network uses the routing number to route the call to the network currently serving the called party.

Today, many different electronic communication means co-exist, e.g., wireline phone, mobile phone, fax, email, IP-telephony, and with it the number of contact addresses. For example, VoIP, also referred to as Internet telephony, uses the public Internet or any other Internet Protocol (= IP) network as the transmission medium for telephone calls by sending voice data in digital packets using IP rather than by traditional circuit transmissions of the PSTN (VoIP = Voice over Internet Protocol).

While number portability from one PSTN network provider to another PSTN network provider has become reality, reliable techniques of number portability from a PSTN network to a VoIP network are still in demand. Often, the introduction of effective number portability from the traditional PSTN to VoIP services is hampered by the bundling of legacy telephone connection with broadband Internet access. Customers will lose their broadband access line like, e.g., DSL if the underlying telephone line is cancelled or transferred to another service provider (DSL = Digital Subscriber Line). Due to this, number portability to VoIP services is not ensured and therefore customers are discouraged from switching to VoIP.

It is the object of the present invention to improve the establishment of telecommunication connections between different electronic communication means.

The object of the present invention is achieved by a method of establishing a telecommunication connection between a terminal of a calling party connected to a circuit-switched network and a terminal of a called party connected to a packet-switched network, whereby the method comprises the steps of receiving at a network node of a circuit-switched network from the calling party a call request addressed to a telecommunication address, in particular a telephone number, issued to the called party by a circuit-switched network; sending a service request message triggered by said telecommunication address from the network node to a network server; sending a mapping query concerning the mapping of said telecommunication address to an associated URL (= Uniform Resource Locator) from the network server to a domain name server; receiving at the network server a URL associated with the telecommunication address from the domain name server; sending from the network server to the network node a connect message requesting to forward the call associated with the call request to a VoIP gateway, the VolP gateway connecting the circuit-switched network and the packet-switched network; routing the call to the VolP gateway; transferring the URL from the network server to the VolP gateway; and initiating the establishment of the telecommunication connection between the terminal of the calling party and the terminal of the called party through the packet-switched network by means of the URL. The object of the present invention is further achieved by a network server for establishing a telecommunication connection between a terminal of a calling party connected to a circuit-switched network and a terminal of a called party connected to a packet-switched network, whereby the network server is adapted for receiving from a network node of a circuit-switched network a service request message triggered by a telecommunication address, in particular a telephone number, of a call request from the calling party, said telecommunication address issued to the called party by a circuit-switched network; sending a mapping query concerning the mapping of said telecommunication address to an associated URL to a domain name server; receiving a URL associated with the telecommunication address from the domain name server; sending to the network node a connect message requesting to forward the call associated with the call request to a VoIP gateway, the VoIP gateway connecting the circuit-switched network and the packet-switched network; transferring the URL to the VoIP gateway and thereby initiating the establishment of the telecommunication connection between the terminal of the calling party and the terminal of the called party through the packet-switched network by means of the URL.

The invention permits that subscribers to a circuit-switched telephone network can change to a VoIP network and keep their telephone number, without the need of an a/b or ISDN line. Thus, the invention adds the port to a new network technology to the existing port options, opening the broad market to VoIP technology. Alternative network carriers can provide IN service and IP networks (IN = Intelligent Network).

With the present invention, the URL can be determined directly with the first query. A simple gateway / User Agent can be integrated in upcoming VolP solutions. The invention is particularly interesting for subscribers without PSTN connection and for IP solutions based on the CTX or VPN architecture (CTX = Centrex; VPN = Virtual Private Network). Moreover, the invention offers mobility as subscribers can register in an arbitrary manner.

Further advantages are achieved by the embodiments of the invention indicated by the dependent claims.

According to a preferred embodiment of the invention, the network server sends a query to a VoIP call control server of the packet-switched network. The query triggers the VoIP call control server to respond in form of a message to the network server, whereby the message comprises the operational status of the terminal of the called party. The operational status of a terminal defines whether the terminal is online, i.e., ready to receive and send communication signals via the network it is connected to. When the network server receives the response to the status query from the VolP call control server, the network server routes the call associated with the call request to the VolP gateway if the terminal of the called party is operationally ready.

If, on the other side, the response to the status query is negative, i.e., states that the terminal of the called party is not operationally ready, e.g., offline or disordered in any other way, the network server routes the call associated with the call request to another, alternative telecommunication target, e.g., a voice mail server, a redirect server, or an alternative terminal of the called party. It is also possible, that the network server terminates the call if the terminal of the called party is not operationally ready. The detailed instructions for the network server how to react to a positive or a negative status response may have been defined prior to the call request by the network provider and/or the network subscribers, i.e., the calling and the called party. The status query permits a state specific routing, i.e., the routing of the call is not pre-defined in a static manner but is dynamically determined dependent on the operation status of the terminal of the called party.

The VoIP gateway requires a URL to route a call through a VoIP network to a VoIP client. According to the invention, the domain name server determines a URL associated with the telecommunication address, in particular with the ordinary telephone number, of the called party. In order to transmit said URL from the network server to the VoIP gateway, two ways are possible.

It is possible that the network server sends the URL together with the connect message to the network node. The connect message requests the recipient of the message, here, the network node, to forward the call associated with the call request to a VoIP gateway which connects the circuit-switched network of the calling party and the packet-switched network of the called party. The proper VoIP gateway fulfilling this criterion will be determined by means of the URL and/or may be retrieved from a data base. The network node then adds the information about the URL in a signalling message, e.g., in a field of a SS7 call request message, and sends the signalling message to the proper VoIP gateway (SS7 = Signalling System Number 7).

It is also possible that the URL is sent without any transit points directly from the network server to the VoIP gateway. Preferably, the network server sends the URL in a - possibly dedicated - connection set up in parallel to the corresponding call to the VoIP gateway, in particular via the packet-switched network. Which one of the described paths the URL will take depends on the network and signalling settings of the involved network. It is possible that a specific path is pre-defined, but it is also possible that a path is dynamically chosen, e.g., as a function of the status of the network node, etc.

A service switching point (= SSP) consists of a hardware switch in combination with a basic call control software and added functionality for the support of IN. The basic call control software provides the capability to separate basic calls from IN-based calls when they arrive at the switch. IN calls contain events and triggers and when one of these is detected the SSP temporarily suspends call processing and initiates a series of transactions with the service control point (= SCP) using a dedicated signalling protocol, e.g., INAP, to determine how it should process the call (INAP = Intelligent Network Application Protocol). A SCP is a real-time database that stores customer records. When accessed by an enquiry from the SSP, the SCP executes service logic that has been customised for a particular application. Following the execution of the code, the SCP sends instructions back to the SSP on how to process the call.

Generally, the network node may be any exchange and/or switch which serves to route a call through the circuit-switched network. As the typical functionalties supplied by the SSP and the SCP in a network with IN architecture are in accordance with the tasks they have to fulfil according to the invention, some advantages may be achieved of the network node is a SSP and the network server is a SCP.

Alternatively, similar transactions could be executed between a signal transfer point (= STP) and a dedicated network server. STP functions can be co-resident with a switch as well as being possibly implemented as a separate entity. For example, the STP is a highly reliable packet switch that allows the concentration of signalling for a large number of trunks and handles the routing of signalling messages. Therefore, some advantages may be achieved for the implementation of the method according to the invention, if the network node is a signal transfer point.

NP in classical PSTN networks is usually achieved with help of a number portability server (= NPS) comprising or accessing a number portability data base (= NPDB). For example, the NPS is provided by a SCP node of the PSTN network. The NPDB is the network element that contains the routing information necessary to support NP. The NPDB provides the association between the called party and the carrier Location Routing Number (= LRN), identifying the switch to which the call should now be routed. The NPDB stores all ported numbers within the ported domain.

By means of the invention, it becomes possible to provide an integrated NP solution for both circuit-switched telephone networks and packet-switched (VolP) networks. The network server is a NPS, and the NPS accesses a NPDB and sends the mapping query to the domain name server if the NPDB classifies the subscriber linked with said telecommunication address as VoIP subscriber. Accordingly, the NPDB contains both ported subscribers of telephone networks as well as VoIP subscribers of packet-switched networks.

It is possible that the network server is not represented as a common NPS accessing a NPDB involved with the known NP functions, but that the network server is a server, e.g., in parallel to a NPS, specially provided for the portability with regard to VolP subscribers who have, e.g., ported their circuit-switched network telecommunication address to a VolP network.

These as well as further features and advantages of the invention will be better appreciated by reading the following detailed description of presently preferred exemplary embodiments taken in conjunction with accompanying drawings of which:
- Fig. 1: is a block diagram of a system according to a first embodiment of the invention.
- Fig. 2: is an operational step diagram according to a first embodiment of the invention.
- Fig. 3: is an operational step diagram according to another embodiment of the invention.

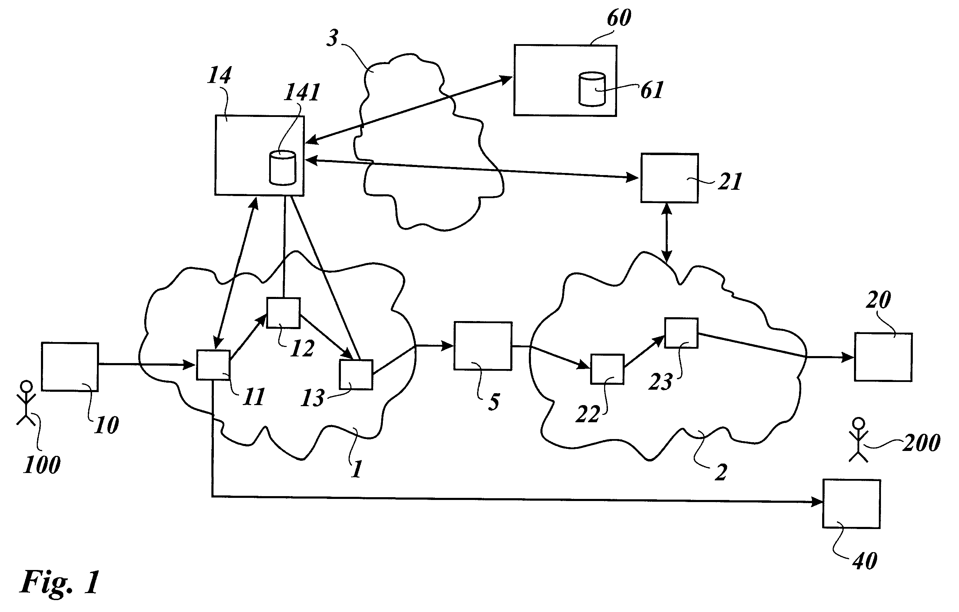

Fig. 1 shows a telecommunication system with a circuit-switched network 1 and packet-switched networks 2, 3. The circuit-switched network 1 may be, e.g., a PSTN, ISDN, GSM, or UMTS network (GSM = Global System for Mobile Communication; UMTS = Universal Mobile Telecommunication Services). It comprises network nodes 11, 12, 13 which have the functionality of switches for switching telecommunication calls transmitted through the telecommunication network 1. The network nodes 11, 12, 13 are adapted to co-operate with a network server 14 adapted to provide portability related information.

In case the telecommunication network 1 is a network with IN architecture, the network nodes 11, 12, 13 may be SSPs, and the network server 14 may be a SCP.

When accessed by an enquiry from a SSP, the SCP executes service logic that has been customised for a particular application. Following the execution of the code, the SCP sends instructions back to the SSP on how to process the call. The bulk of current IN transactions consists of translating a number dialled by a caller into another number depending on the needs of the corresponding service, e.g., when translating toll free numbers to regular PSTN numbers.

A first telecommunication terminal 10 assigned to a calling party 100 is connected to the circuit-switched network 1 and can be used to initiate and receive telecommunication calls via the circuit-switched network 1. For example, the telecommunication terminal 10 is a desk-top telephone set connected over a wireline connection to an ISDN network 1. Likewise, the telecommunication terminal 10 may be a mobile phone connected over a wireless connection to a GSM network 1.

The packet-switched networks 2, 3 may be the public Internet or other packet-switched communication networks based on an IP protocol. According to a further embodiment, the packet-switched networks 2, 3 provide additional functionalities to support VoIP communication sessions between communication partners using the SIP protocol or the H.323 protocol (SIP = Session Initiation Protocol). The packet-switched networks 2, 3 may be composed of various physical sub-networks like, e.g., Ethernet, ATM networks and wireless access networks (e.g., WLAN) interlinked via a common layer three IP communication layer (ATM = Asynchronous Transfer Mode; WLAN = Wireless Local Area Network). In this exemplary embodiment, the SIP protocol will be referred to.

The packet-switched network 2 comprises VolP call control servers, in particular SIP servers 21, 22, 23 which may cover the functions of a SIP proxy server, a SIP redirect server, and a SIP registrar server. SIP proxy servers, or simply "proxies", are elements that route SIP requests to user agent servers (= UAS) and SIP responses to user agent clients (= UAC). A SIP request may traverse several proxies 21, 22, 23 on its way to the UAS 20. Each will make routing decisions, modifying the request before forwarding it to the next element. Responses will route through the same set of proxies 21, 22, 23 traversed by the request in the reverse order.

A redirect server allows for redirection which enables users to temporarily change geographic location and still be contactable through the same SIP identity. The registrar server makes it possible for users to alter the address at which they are contactable. Further, the SIP registrar is a server that accepts REGISTER requests and places the information it receives in those requests into the location service for the domain it handles. If a user wants to initiate a session with another user, SIP must discover the current host(s) at which the destination user is reachable. This discovery process is frequently accomplished by SIP network elements such as proxy servers and redirect servers which are responsible for receiving a request, determining where to send it based on knowledge of the location of the user, and then sending it there. To do this, SIP network elements consult an abstract service known as a location service, which provides address bindings for a particular domain.
These address bindings map an incoming SIP URL, sip:bob@tele1.com, for example, to one or more URLs that are somehow "closer" to the desired user, sip:bob@engineering.tele1.com, for example. Ultimately, a proxy will consult a location service that maps a received URL to the user agent(s) at which the desired recipient is currently residing. Two or more of the proxy, redirect and registrar functions may be merged into one SIP server.

A second telecommunication terminal 20 assigned to a called party 200 is connected to the packet-switched network 2 and can be used to initiate and receive VoIP telecommunication calls via the packet-switched network 1. The telecommunication terminal 20 is a VoIP hardphone or a VoIP softphone, e.g., a VolP telephone set or a PC, equipped with microphone, speakers, and a sound card, operating as softphone due to a dedicated VolP telephony software.

It is also possible that the telecommunication terminal 20 comprises a standard analogue telephone and an adapter. The telephone is connected to an ATA adapter which, in turn, must be connected via an Ethernet cable to a high-speed IP network connection such as DSL (ATA = Analog Telephone Adaptor). The ATA converts analogue voice into digitised voice signals and then into a RTP/IP data packet stream (RTP = Real Time Transport Protocol). The data packets are then transmitted via the DSL connection to a router of the IP network.

The called party 200 was first assigned a telephone number by a so-called donor network. This donor network may be a circuit-switched network, e.g., a PSTN, an ISDN, or a GSM network, and the telephone number issued by the network may be an ordinary telephone number, e.g., according to the ITU-T Recommendation E.164. When the called party 200 changes from the circuit-switched donor network to the VoIP-based telecommunication network 2, his telephone number is ported to the VoIP-based telecommunication network 2. For the sake of simplicity, we will ignore any transit networks. Then the called party 20 is reachable within the IP-based telecommunication network 2 via an IP-compatible address, e.g., a VoIP address like a SIP URL. Any calls directed to the original telephone number issued by the donor network have to be redirected to the SIP URL under which the called party 20 is currently reachable. According to the invention, the number portability for VolP is feasible by means of a Domain Name Server 60 which is accessible from the network server 14 through the IP network 3.

A Domain Name Server (= DNS) is an Internet server that translates domain names into IP addresses. A Dynamic Delegation Discovery Server (= DDDS) is described in the RFC documents 3401 to 3405. The DNS is used as a data store for the rules that allow a DDDS application to function, i.e., mapping some unique string to data stored within the DNS by iteratively applying string transformation rules until a terminal condition is reached. The transformation rules are filed as NAPTR (= Naming Authority Pointer) Resource Records (= RR) in the DNS. These abilities of a DDDS are used to map a telephone number to service endpoints such as SIP, i.e., to map E.164 telephone numbers to SIP URLs.

The circuit-switched network 1 and the packet-switched networks 2, 3 are interconnected among each other, preferably with the help of a mediating device. Particularly, the circuit-switched network 1 and the packet-switched network 2 are interconnected by means of a gateway 5, i.e., a device bridging the conventional telephone network 1 to the VolP telephone network 2. The system described by Fig. 1 further comprises an alternative telecommunication target 40 which may be, e.g., an alternative, second telecommunication terminal assigned to the called party 200.

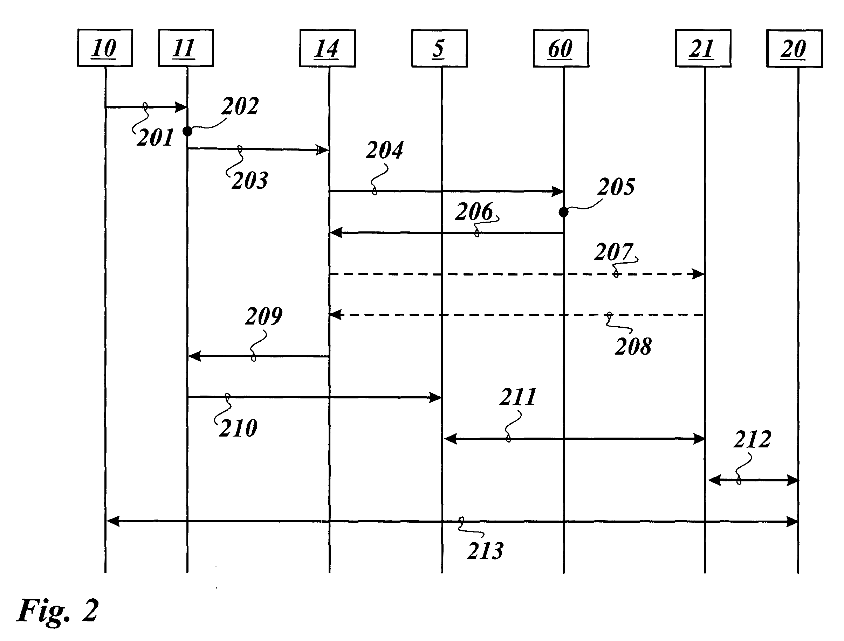

Figure 2 shows operational steps which are carried out to provide a communication service according to a first embodiment of the invention described in Fig. 1. Fig. 2 shows a first and a second telecommunication terminal 10, 20, a network node 11, a network server 14, a gateway 5, a DNS 60, and a SIP proxy 21 in accordance with the embodiment described in Fig. 1. The network node 11 represents an exemplary network node of the telecommunication network 1 where the call is processed and routed. It is also possible that another network node 12, 13 of the telecommunication network 1 receives and processes an incoming call. The same is true for the exemplarily shown SIP proxy 21. It is also possible that another SIP proxy 22, 23 of the telecommunication network 2 processes and routes the call.

The calling party 100 who uses the first telecommunication terminal 10 wishes to call and communicate with the called party 200 who uses the second telecommunication terminal 20. The calling party 100 triggers the telecommunication terminal 10 to set off a call request 201 to the network node 11, e.g., by dialling a telephone number assigned by the donor network to the called party 20. The call request 201 is received by the network node 11 where it triggers a query 203 sent from the network node 11 to the network server 14. The trigger may be implemented as a Query on Release or as a Terminating Trigger (= TT).

In the QoR scheme, the telecommunication network 1 receives the call request 201 from the telecommunication terminal 10 of the calling party 100 and routes the call request 201 to the donor network. The donor network releases the call and indicates that the dialled telephone number has been ported out of that switch. In a following step, the telecommunication network 1 sends a query 203 to the network server 14, e.g., in form of an INAP message.

It is possible that the network server 14 is a common NPS. If the NPS 14 determines that the query concerning the called party 200 relates to a VoIP subscriber, the NPS 14 is provided with a link to the proper DNS 60 where the query can be forwarded to as an IP message 204. To determine whether the called party 200 is a VolP subscriber, the NPS 14 consults a NPDB 141 of the NPS. The NPDB may comprise a list of telephone numbers which have been ported to an IP network and which are to be mapped to an IP address. If the telephone number contained within the incoming query represents an entry of the list, the NPS forwards the query to the DNS. Also the information which DNS is the proper one for a specific query may be stored in the memory 141.

It is also possible that the network server 14 is a dedicated server for providing portability for VoIP. Then the network server 14 will only receive those queries which relate to a VoIP subscriber. Every incoming query will be forwarded by the network server 14 without examination as IP message 204 to the proper DNS 60.

At the DNS 60, the telephone number is retrieved from the query and it is checked if a SIP URL corresponding to the the telephone number is available. If so, the telephone number is mapped in step 205 to the corresponding IP address of the called party, i.e., the SIP URL. The DNS 60 uses the DNS NAPTR resource records stored in a memory 61 to map E.164, i.e., ordinary telephone numbers to IP addressing schemes like SIP, H.323, or email. Furthermore, any preferences stored in connection with the specific SIP URL are read. In the step 206, these pieces of information are re-sent from the DNS 60 to the network server 14.

Optionally, the network server 14 may send a status enquiry 207 to the SIP registrar 21 to check if the telecommunication terminal 20 with the SIP URL retrieved from the DNS 60 is operationally ready and online. As a VolP terminal first has to register at the SIP registrar 21 for a call, the SIP registrar 21 keeps a list of SIP clients which are online. Therefore, the SIP registrar 21 is enabled to respond to the status enquiry 207 with a status message 208 which indicates whether the telecommunication terminal 20 is online.

If the network server 14 receives the status message 208 that the telecommunication terminal 20 is online, the network server 14 will prompt that the call initiated by the telecommunication terminal 10 is routed to the gateway 5. In case the status message 208 indicates that the telecommunication terminal 20 is not online, the network server 14 will prompt that the call initiated by the telecommunication terminal 10 is routed to the alternative telecommunication target 40 shown in Fig. 1, which may be, e.g., a voice mail server or an alternative telecommunication terminal of the called party 200. It is also possible that the network server 14 is adapted to trigger the termination of the call if the target terminal 20 is offline or otherwise operationally not ready. The "offline" case is not addressed any further in this description. Instead, the further description will be limited to the former case that the telecommunication terminal 10 is online.

Next, the network server 14 sends a connect message 209 comprising the SIP URL of the telecommunication terminal 20 to the network node 11, providing the network node 11 with routing instructions with regard to the call associated with the call request 201. The connect message 209 requests the network node 11 to forward the call associated with the call request 201 to a VolP gateway which connects the circuit-switched network 1 where the call request 201 was received and the packet-switched network of the called party, in this case with the VolP gateway 5. The SIP URL is packed by the network node 11 in a field of a SS7 call signalling message, and the SS7 message is sent from the network node 11 to the VolP gateway 5. The address of the proper gateway 5 has been determined by the network server 14 based on the SIP URL of the telecommunication terminal 20 and transmitted in message 209 to the network node 11. It is possible, for example, that a data base comprising addresses of gateways is stored in a memory 141 of the network server 14, and that an address of a proper gateway is chosen from the data base in dependance of the SIP URL of the telecommunication terminal 20.

Once the gateway 5 has received the SIP URL of the telecommunication terminal 20, the gateway 5 is enabled to initiate the set-up of a SIP connection, shown as steps 211 and 212, possibly by help of the SIP proxy server 21 and/or the DNS 60, and route the call to the telecommunication terminal 20. The call connection between the calling party 100 and the called party 200 is established according to the ordinary SIP call set-up procedure. Finally, an end-to-end communication connection 213 is set up between the calling party 100 at the telecommunication terminal 10 and the called party 200 at the telecommunication terminal 20, using the IP/UDP/RTP protocol stack (UDP = User Datagram Protocol).

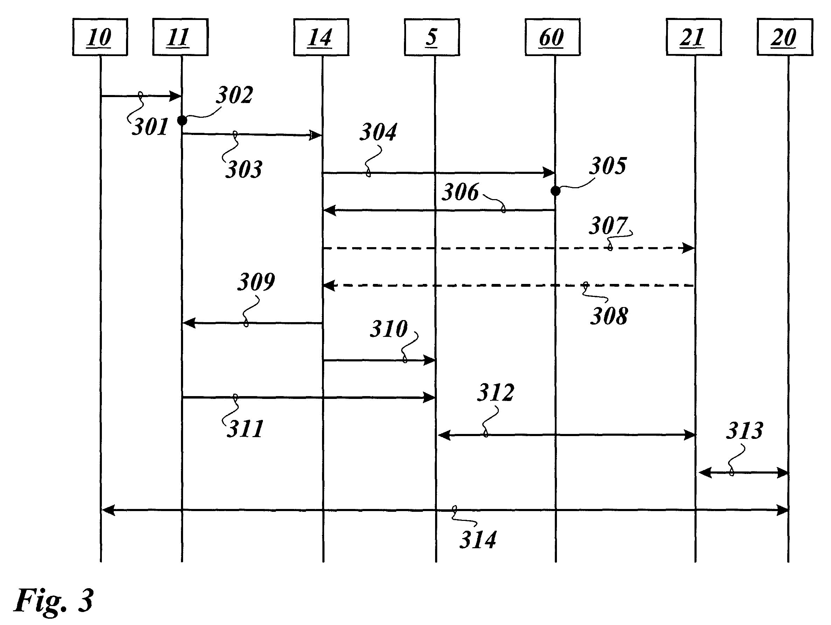

Figure 3 relates to another embodiment of the method according to the invention. Fig. 3 shows the operational steps which are carried out to provide a communication service according to this other embodiment. In analogy to Fig. 2, Fig. 3 shows a first and a second telecommunication terminal 10, 20, a network node 11, a network server 14, a gateway 5, a DNS 60, and a SIP proxy 21 in accordance with Fig. 1.

The operational steps 301 to 308 are identical to the operational steps 201 to 208 described with regard to Fig. 2. Therefore, the steps 301 to 308 are not commented on a second time. Instead, it is referred to the description given with regard to Fig. 2. Differences with respect to the operational steps described in Fig. 2 exist from step 309 onwards, where the following description starts.

The network server 14 sends a connect message 309 to the network node 11, providing the network node 11 with routing instructions with regard to the call associated with the call request 301. The connect message 309 requests the network node 11 to forward the call associated with the call request 301 to a VoIP gateway which connects the circuit-switched network 1 where the call request 301 was received and the packet-switched network of the called party, in this case with the VolP gateway 5. The network node 11 receives the connect message 309 from the network server 14 and sends a call signalling message 311 to the gateway 5.

In a parallel message 310 ― preferably a message under IP protocol through a packet-switched network ― the network server 14 transmits the SIP URL directly to the gateway 5. The address of the proper gateway 5 has been determined by the network server 14 based on the SIP URL of the telecommunication terminal 20 and transmitted in message 309 to the network node 11. It is possible, for example, that a data base comprising addresses of gateways is stored in a memory 141 of the network server 14, and that an address of a proper gateway is chosen from the data base in dependance of the SIP URL of the telecommunication terminal 20.

Once the gateway 5 has received the SIP URL of the telecommunication terminal 20 from the network server 14 and the call signalling message 311 from the network node 11, the gateway 5 is enabled to initiate the set-up of a SIP connection, shown as steps 312 and 313, possibly by help of the SIP proxy server 21 and/or the DNS 60, and route the call to the telecommunication terminal 20. The call connection between the calling party 100 and the called party 200 is established according to the ordinary SIP call set-up procedure. Finally, an end-to-end communication connection 314 is set up between the calling party 100 at the telecommunication terminal 10 and the called party 200 at the telecommunication terminal 20, using the IP/UDP/RTP protocol stack.

## Claims

1. A method of establishing a telecommunication connection (213, 314) between a terminal (10) of a calling party (100) connected to a circuit-switched network (1) and a terminal (20) of a called party (200) connected to a packet-switched network (2, 3),
**characterised in**
**that** the method comprises the steps of:
receiving at a network node (11) of a circuit-switched network (1) from the calling party (100) a call request (201, 301) addressed to a telecommunication address, in particular a telephone number, issued to the called party (100) by a circuit-switched network (1);
sending a service request message (203, 303) triggered by said telecommunication address from the network node (11) to a network server (14);
sending a mapping query (204, 304) concerning the mapping of said telecommunication address to an associated URL from the network server (14) to a domain name server (60);
receiving at the network server (14) a URL associated with the telecommunication address from the domain name server (60);
sending from the network server (14) to the network node (11) a connect message (209, 309) requesting to forward the call associated with the call request (201, 301) to a VoIP gateway (5), the VolP gateway (5) connecting the circuit-switched network (1) and the packet-switched network (2, 3);
routing the call to the VoIP gateway (5);
transferring the URL from the network server (14) to the VoIP gateway (5); and
initiating the establishment of the telecommunication connection (213, 314) between the terminal (10) of the calling party (100) and the terminal (20) of the called party (200) through the packet-switched network (2, 3) by means of the URL.

2. The method of claim 1,
**characterised in**
**that** the method comprises the steps of:
sending a status query (207, 307) concerning the operational readiness of the terminal (20) of the called party (200) from the network server (14) to a VoIP call control server (21) of the packet-switched network (2, 3);
receiving at the network server (14) a response (208, 308) to the status query (207, 307) from the VoIP call control server (21);
routing the call to the VoIP gateway (5) if the terminal (20) of the called party (200) is operationally ready.

3. The method of claim 2,
**characterised in**
**that** the method comprises the step of:
routing the call to an alternative telecommunication target (40) if the terminal (20) of the called party (200) is not operationally ready;

4. The method of claim 1,
**characterised in**
**that** the method comprises the steps of:
sending the URL together with the connect message (209, 309) from the network server (14) to the network node (11);
inserting the URL in a signalling message (210) of the circuit-switched network (1), in particular in a SS7 call request message;
sending the signalling message (210) from the network node (11) to the VolP gateway (5).

5. The method of claim 1,
**characterised in**
**that** the method comprises the step of:
sending the URL in parallel to the corresponding call (311) directly from the network server (14) to the VoIP gateway (5), in particular via the packet-switched network (2, 3).

6. The method of claim 1,
**characterised in**
**that** the network node (11) is a service switching point and the network server (14) is a service control point.

7. The method of claim 1,
**characterised in**
**that** the network node (11) is a signal transfer point.

8. The method of claim 1,
**characterised in**
**that** the network server (14) is a number portability server and that the number portability server accesses a number portability data base (141) and sends the mapping query (204, 304) to the domain name server (60) if the number portability data base (141) classifies the subscriber (200) linked with said telecommunication address as VolP subscriber.

9. The method of claim 1,
**characterised in**
**that** the network server (14) is a dedicated server for VolP subscribers.

10. A network server (14) for establishing a telecommunication connection (213, 314) between a terminal (10) of a calling party (100) connected to a circuit-switched network (1) and a terminal (20) of a called party (200) connected to a packet-switched network (2),
**characterised in**
**that** the network server (14) is adapted for receiving from a network node (11) of a circuit-switched network (1) a service request message (203, 303) triggered by a telecommunication address, in particular a telephone number, of a call request (201, 301) from the calling party (100), said telecommunication address issued to the called party (100) by a circuit-switched network (1); sending a mapping query (204, 304) concerning the mapping of said telecommunication address to an associated URL to a domain name server (60); receiving a URL associated with the telecommunication address from the domain name server (60); sending to the network node (11) a connect message (209, 309) requesting to forward the call associated with the call request (201, 301) to a VolP gateway (5), the VolP gateway (5) connecting the circuit-switched network (1) and the packet-switched network (2, 3); transferring the URL to the VoIP gateway (5) and thereby initiating the establishment of the telecommunication connection (213, 314) between the terminal (10) of the calling party (100) and the terminal (20) of the called party (200) through the packet-switched network (2, 3) by means of the URL.
